# EUROPÄISCHE PATENTSCHRIFT

(11) **EP 1 841 985 B1**
(45) Veröffentlichungstag und Bekanntmachung des Hinweises auf die Patenterteilung: **30.07.2008**
(21) Anmeldenummer: 05818473.0
(22) Anmeldetag: 13.12.2005
(51) Int. Cl.: F16H 3/091

(54) **STUFENWECHSELGETRIEBE**
VARIABLE SPEED-CHANGE GEARBOX
BOITE DE VITESSES ETAGEE

(30) Priorität: 27.01.2005 DE 102005005338
(43) Veröffentlichungstag der Anmeldung: 10.10.2007
(73) Patentinhaber: GETRAG Getriebe- und Zahnradfabrik Hermann Hagenmeyer GmbH & Cie KG, 74199 Untergruppenbach (DE)
(72) Erfinder: NICKLASS, Oliver, 76709 Kronau (DE)
(74) Vertreter: Steil, Christian
(86) Internationale Anmeldenummer: PCT/EP2005/013378
(87) Internationale Veröffentlichungsnummer: WO 2006/079393

(56) Entgegenhaltungen:
- EP-A- 0 798 491
- EP-A- 1 031 765
- US-A- 4 271 715
- US-A- 5 014 567
- US-A- 5 881 600

## Beschreibung

Die vorliegende Erfindung betrifft ein Stufenwechselgetriebe, insbesondere für Kraftfahrzeuge, mit einem Gehäuse, einer Antriebswelleneinrichtung, einer Abtriebswelle und einer Vorgelegewelle, wobei eine Mehrzahl von Radsätzen an der Antriebswelle bzw. der Vorgelegewelle gelagert ist, wobei die Radsätze zur Einrichtung unterschiedlicher Gangstufen mittels jeweiliger Schaltkupplungen geschaltet werden können, wobei die Vorgelegewelle mit der Abtriebswelle über einen Abtriebskonstantenradsatz verbunden ist, und wobei die Abtriebswelle im Bereich ihrer gegenüberliegenden Enden mittels zweier Lager drehbar an dem Gehäuse gelagert ist.

Ein derartiges Stufenwechselgetriebe ist bekannt aus der gattungsbildenden EP 1 031 765 A2. Bei diesem bekannten Getriebe handelt es sich um ein sog. Inline-Getriebe, also ein Getriebe für den Längseinbau in dem Kraftfahrzeug.

Derartige übliche Inline-Getriebe haben in der Regel einen Antriebskonstantenradsatz. Ein derartiger Antriebskonstantenradsatz beinhaltet gewöhnlicher weise am Eingang des Getriebes ein mit der Antriebswelle fest verbundenes Festrad und ein mit der Vorgelegewelle fest verbundenes Festrad. Für den Fall von Doppelkupplungsgetrieben ist gewöhnlich für jede Antriebswelle ein eigener Antriebskonstantenradsatz vorgesehen.

Ein solcher Antriebskonstantenradsatz übersetzt das getriebeeingangsseitige Moment (in der Regel das Moment eines Motors des Kraftfahrzeuges wie eines Verbrennungsmotors) direkt am Getriebeeingang. Dies führt zu einer vergleichsweise hohen Momentenbelastung an der Vorgelegewelle.

Dies führt dazu, dass die Verzahnungen der Radsätze für die unterschiedlichen Gangstufen relativ breit ausgeführt werden müssen, um die hohen Momente aufzunehmen. Auch die Schaltkupplungen sind auf die vergleichsweise hohen Momente hin auszulegen, insbesondere dann, wenn es sich bei den Schaltkupplungen wie üblich um sog. Synchronkupplungen handelt.

Das eingangs genannte Dokument EP 1 031 765 A2 betrifft hingegen ein Inline-Getriebe mit einem Abtriebskonstantenradsatz. Bei einem solchen Getriebetyp sitzt ein Konstantenradsatz im Bereich des Getriebeausgangs bzw. im Bereich der Abtriebswelle. Durch diese Maßnahme geht die Momentenbelastung an der vorgelegewelle zurück. Allerdings steigt im Bereich der Vorgelegewelle im Vergleich zu Lösungen mit Antriebskonstante das Drehzahlniveau.

Durch die geringeren Momentenbelastungen können die Verzahnungen der Radsätze schmaler als bei Lösungen mit Antriebskonstantenradsatz ausgeführt werden. Das Getriebe kann daher generell in axialer Richtung kürzer ausgebildet werden. Lediglich der Abtriebskonstantenradsatz muss deutlich breiter als bei Stufenwechselgetrieben mit Antriebskonstantenradsatz ausgeführt werden. Ferner sinkt die Belastung der Schaltkupplungen (Synchronisierungen). Hierdurch lassen sich auch kürzere Schaltzeiten realisieren.

Ein Problem bei Stufenwechselgetrieben mit Abtriebskonstantenradsatz besteht darin, dass es vergleichsweise schwierig ist, den Abtriebskonstantenradsatz so steif zu lagern, dass er trotz seiner vergleichsweise großen Breite noch ein akzeptables Tragbild hat. Obgleich die Abtriebswelle von der Konzeption her generell kurz ausgeführt werden kann, wird sie aus dem genannten Grund dennoch meistens nach hinten weit auskragend gelagert, wie es beispielsweise in der EP 1 031 765 A2 ausgeführt ist.

Somit wird der konzeptionell erzielbare Baulängenvorteil des Getriebetyps wieder aufgegeben.

Aus der DE 39 32 264 C2 ist ein weiteres Stufenwechselgetriebe mit Abtriebskonstante bekannt. Das Getriebe ist als 5-Gang-Getriebe ausgeführt, wobei der vierte Gang als Direktgang ausgeführt ist, bei dem die Antriebswelle direkt mit der Abtriebswelle verbunden ist. Ferner ist die Antriebswelle in der Abtriebswelle gelagert. Auch hier kragt die Abtriebswelle in axialer Richtung relativ weit aus.

Ein weiteres Getriebekonzept mit Abtriebskonstante ist aus der EP 0 798 491 B1 bekannt. Hierbei handelt es sich um ein 6-Gang-Getriebe, bei dem die vierte Gangstufe als Direktgangstufe ausgebildet ist. Die Antriebswelle ist wiederum in der Abtriebswelle gelagert. Auch bei dieser Ausführungsform ist eine aufwendige Lagerung der Abtriebswelle vorgesehen.

Vor dem obigen Hintergrund ist es die Aufgabe der Erfindung, ein verbessertes Stufenwechselgetriebe anzugeben, insbesondere ein Stufenwechselgetriebe mit Abtriebskonstante und kurzer Baulänge.

Diese Aufgabe wird bei dem eingangs genannten Stufenwechselgetriebe dadurch gelöst, dass wenigstens einer der Radsätze in axialer Richtung im Bereich zwischen den zwei Lagern der Abtriebswelle gelagert ist.

Durch diese Maßnahme ergibt sich eine Lagerung der Abtriebswelle mit einem günstigen Tragbild. Somit lässt sich auch eine sehr steife Lagerung des Abtriebskonstantenradsatzes erzielen, und zwar insbesondere im Wesentlichen ohne Baulängennachteile. Ferner ergibt sich in der Regel eine deutlich günstigere Lagerbelastung. Die Lager können dabei weiter entfernt von dem Abtriebskonstantenradsatz angeordnet sein.

Die Aufgabe wird somit vollkommen gelöst.

Von besonderem Vorteil ist es, wenn die Abtriebswelle im Bereich ihres einen Endes in einem Hohlabschnitt der Antriebswelleneinrichtung gelagert ist.

Dies führt insgesamt zu einer günstigen relativen Lagerung zwischen den Wellen des Stufenwechselgetriebes.

Von besonderem Vorteil ist es dabei, wenn ein Rad des zwischen den Lagern gelagerten Radsatzes außen an dem Hohlabschnitt der Antriebswelleneinrichtung gelagert ist.

Bei dieser Ausführungsform ist der zwischen den Lagern gelagerte Radsatz fliegend an dem Hohlabschnitt gelagert. Insgesamt kann so die Lagerung der Abtriebswelle auf einfache Weise an Stützbreite gewinnen.

Gemäß einer weiteren bevorzugten Ausführungsform ist eine Schaltkupplung zum Schalten des zwischen den Lagern gelagerten Radsatzes gleichfalls dazwischen gelagert, insbesondere an dem Hohlabschnitt.

Hierdurch kann die Stützbreite der Abtriebswelle noch weiter vergrößert werden.

Eine weitere bevorzugte Ausführungsform sieht vor, dass ein Festrad des Abtriebskonstantenradsatzes an der Abtriebswelle in axialer Richtung zwischen den zwei Lagern befestigt ist.

Insgesamt führt dies dazu, dass sowohl der Abtriebskonstantenradsatz als auch der wenigstens eine Radsatz zur Einrichtung einer jeweiligen Gangstufe zwischen den zwei Lagern der Abtriebswelle gelagert sind. Dies führt insgesamt zu einer sehr großen Stützbreite. Somit sinkt die Lagerbelastung, es kann jedoch eine ausreichend steife Lagerung des Abtriebskonstantenradsatzes erzielt werden.

Gemäß einer weiteren bevorzugten Ausführungsform ist dabei eine Direktschaltkupplung vorgesehen, um die Antriebswelleneinrichtung direkt mit der Abtriebswelle zu verbinden.

Auf diese Weise wird ein Direktgang eingerichtet, so dass insgesamt eine weitere Baulängenreduzierung möglich ist. Denn für den Direktgang wird ein Gangstufen-Radsatz eingespart.

Dabei ist es von besonderem Vorteil, wenn die Direktschaltkupplung und die Schaltkupplung zum Schalten des zwischen den Lagern gelagerten Radsatzes in einem Schaltkupplungspaket integriert sind.

Dies führt zu einer weiteren Verkürzung der Baulänge des Stufenwechselgetriebes.

Gemäß einer ersten alternativen Ausführungsform ist die Antriebswelleneinrichtung durch eine einzelne Antriebswelle gebildet.

Bei dieser Ausführungsform kann das Stufenwechselgetriebe als Handschaltgetriebe (HSG) oder als automatisiertes Schaltgetriebe (ASG) ausgebildet sein.

Bei einer zweiten alternativen Ausführungsform weist die Antriebswelleneinrichtung eine erste Antriebswelle und eine hierzu koaxiale, als Hohlwelle ausgebildete zweite Antriebswelle auf, wobei die zwei Antriebswellen mit einer Doppelkupplungsanordnung verbindbar sind.

Bei der zweiten alternativen Ausführungsform ist das Stufenwechselgetriebe folglich als Doppelkupplungsgetriebe (DKG) ausgebildet.

Dabei versteht sich, dass ein ggf. vorgesehener Hohlabschnitt zur Aufnahme der Abtriebswelle lediglich an einer der zwei Antriebswellen, insbesondere an der ersten Antriebswelle, vorgesehen ist.

Bei der Ausbildung des Stufenwechselgetriebes als Doppelkupplungsgetriebe ist es von besonderem Vorteil, wenn die erste Welle in axialer Richtung gegenüber der zweiten Welle vorsteht und wenn die zweite welle im Austrittsbereich der ersten Welle nicht an dem Gehäuse gelagert ist.

Dies bedingt in der Regel eine Lagerung der zwei Antriebswellen aufeinander. Insgesamt lässt sich so eine Gehäusewand einsparen, die ansonsten in dem Austrittsbereich notwendig ist. Es versteht sich, dass ein solches Lager zur Lagerung der zweiten Antriebswelle an der ersten Antriebswelle insbesondere in dem Austrittsbereich anzuordnen ist.

Bei einer alternativen Ausführungsform des erfindungsgemäßen Stufenwechselgetriebes weist die Abtriebswelle im Bereich ihres einen Endes einen Hohlabschnitt auf, in dem ein Ende der Antriebswelleneinrichtung gelagert ist.

Auch bei dieser Ausführungsform ist es möglich, einen Radsatz zur Einrichtung einer Gangstufe zwischen den Lagern der Abtriebswelle anzuordnen. Dabei kann der zwischen den zwei Lagern angeordnete Radsatz beispielsweise auch als ein "Overdrive-Radsatz" ausgelegt sein, der nach der Art eines zweiten Abtriebskonstantenradsatzes zwischen den zwei Lagern angeordnet ist. Es versteht sich dabei, dass dann in der Regel sowohl der erste und der zweite Abtriebskonstantenradsatz schaltbar sind.

Ferner ist es insgesamt vorteilhaft, wenn die Antriebswelleneinrichtung im Bereich ihrer Enden mittels zweier Lager an dem Gehäuse drehbar gelagert ist.

Bei der erfindungsgemäßen Ausgestaltung ist es dabei in der Regel hinreichend, für die Lagerung der Antriebswelleneinrichtung zwei Lager Vorzusehen. Mit anderen Worten ist ein drittes Lager in der Regel nicht notwendig, selbst bei 5, 6 oder 7 Gangstufen.

Gemäß einer weiteren insgesamt bevorzugten Ausführungsform sind die Antriebswelleneinrichtungen und die Abtriebswelle insgesamt mittels drei Lagern an dem Gehäuse gelagert.

Bei dieser Ausführungsform ist es beispielsweise möglich, lediglich eine Zwischenwand zwischen einer getriebeeingangsseitigen Gehäusewand und einer getriebeausgangsseitigen Gehäusewand vorzusehen.

Ferner ist es insgesamt vorteilhaft, wenn die Antriebswelleneinrichtung und die Abtriebswelle koaxial zueinander ausgerichtet sind.

Obgleich generell auch eine parallele Ausrichtung denkbar ist, versteht sich, dass eine koaxiale Ausrichtung sich insbesondere dann ergibt, wenn die Antriebswelleneinrichtung und die Abtriebswelle ineinander gelagert sind.

Insgesamt wird mit dem erfindungsgemäßen Stufenwechselgetriebe in den verschiedenen Ausführungsformen wenigstens einer der folgenden Vorteile erzielt:
- es ergibt sich eine kurze Baulänge des Gesamtgetriebes;
- es ergibt sich eine niedrige Momentenbelastung der Verzahnungen der Radsätze, wodurch es ggf. möglich ist, insbesondere kostengünstigere Werkstoffe und Veredelungsverfahren zu verwenden. Insbesondere kann sich eine größere Auswahlbreite bei Wärmebehandlungsverfahren für die einzelnen Zahnräder und sonstigen Getriebebauteile ergeben;
- es ergeben sich niedrigere Massenträgheiten, wodurch kurze Schaltzeiten und/oder kleiner dimensionierte Schaltkupplungen bzw. Synchronkupplungen realisierbar sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische vereinfachte Darstellung einer ersten Ausführungsform des erfindungsgemäßen Stufenwechselgetriebes, insbesondere in Form eines HSG oder ASG;
- Fig. 2: eine weitere Ausführungsform des erfindungsgemäßen Stufenwechselgetriebes, insbesondere in Form eines HSG oder ASG;
- Fig. 3: eine schematische Darstellung einer weiteren Ausführungsform des erfindungsgemäßen Stufenwechselgetriebes, wobei der Radsatzaufbau insbesondere für ein HSG geeignet ist;
- Fig. 4: eine schematische Darstellung einer weiteren Ausführungsform des erfindungsgemäßen Stufenwechselgetriebes, wobei der Radsatzaufbau insbesondere für ein ASG ausgelegt ist;
- Fig. 5: eine schematische Darstellung einer weiteren Ausführungsform des erfindungsgemäßen Stufenwechselgetriebes, das als DKG ausgelegt ist; und
- Fig. 6: eine schematische Darstellung einer weiteren Ausführungsform des erfindungsgemäßen Stufenwechselgetriebes, das als DKG ausgelegt ist.

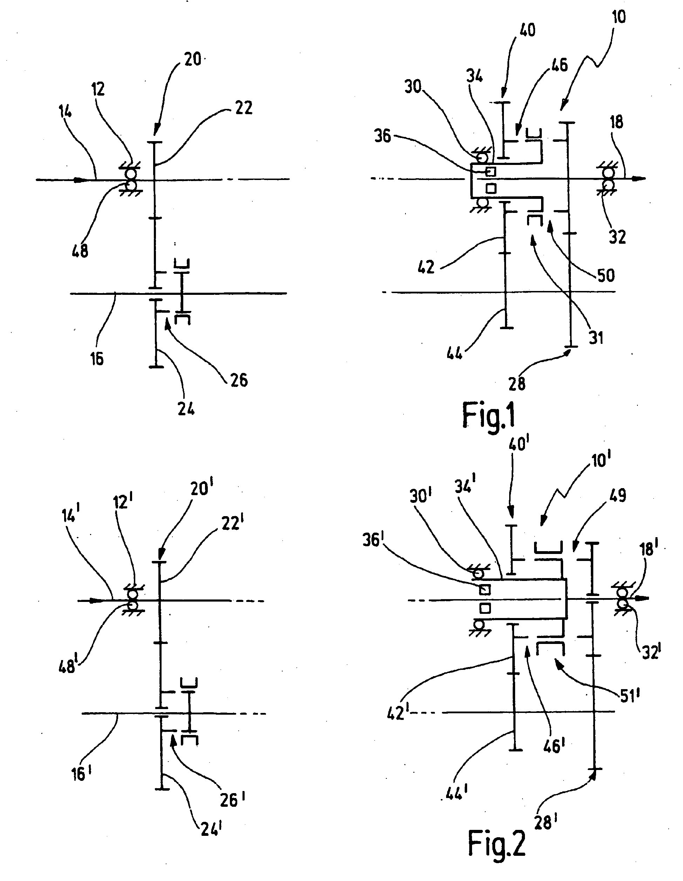

In Fig. 1 ist eine erste Ausführungsform des erfindungsgemäßen Stufenwechselgetriebes insgesamt mit 10 bezeichnet.

Das Stufenwechselgetriebe 10 ist als Inline-Getriebe, also als Getriebe für den Längseinbau in einem Kraftfahrzeug, insbesondere einen Personenkraftwagen, ausgelegt.

Das Stufenwechselgetriebe 10 weist ein Gehäuse 12 auf, das in der Regel als mehrteiliges Gehäuse ausgeführt ist. Zum Zwecke einer einfacheren Darstellung ist das Gehäuse 12 in der Darstellung der Fig. 1 - sowie in den folgenden Darstellungen - nicht unterteilt dargestellt. Das Gehäuse 12 kann ein Gehäuse sein, das lediglich zur Aufnahme von funktionswesentlichen Teilen des Stufenwechselgetriebes dient. Das Gehäuse 12 kann jedoch auch als Teil benachbarter Gehäuse ausgebildet sein und beispielsweise eine Trennwand zwischen den Radsätzen des Stufenwechselgetriebes 10 und/oder zu einer eingangsseitigen Anfahr- und Trennkupplung oder Ähnliches beinhalten.

Das Stufenwechselgetriebe 10 weist ferner eine Antriebswelleneinrichtung in Form einer einzelnen Antriebswelle 14 auf, die beispielsweise mit dem Ausgangsglied einer Anfahr- und Trennkupplung verbindbar ist.

Parallel zu der Antriebswelle 14 ist eine Vorgelegewelle 16 vorgesehen. Eine Abtriebswelle 18 ist koaxial zu der Antriebswelle 14 ausgerichtet.

Das Stufenwechselgetriebe 10 weist eine Mehrzahl von Radsätzen zur Einrichtung unterschiedlicher Gangstufen auf, von denen im Bereich des Getriebeeingangs beispielsweise einer bei 20 dargestellt ist. Der Radsatz 20 weist ein Festrad 22 auf, das mit der Antriebswelle 14 verbunden ist, sowie ein Losrad bzw. Gangrad 24, das drehbar an der Vorgelegewelle 16 gelagert ist.

Es ist eine erste Schaltkupplung 26, beispielsweise in Form einer Synchronkupplung, vorgesehen, um die dem Radsatz 20 zugeordnete Gangstufe zu schalten, also den zugeordneten Gang ein- bzw. auszulegen.

Ferner weist das Stufenwechselgetriebe 10 einen Abtriebskonstantenradsatz 28 im Bereich des Getriebeausgangs auf. Der Abtriebskonstantenradsatz 28 weist zwei Festräder auf, von denen eines mit der Vorgelegewelle 16 und eines mit der Abtriebswelle 18 verbunden ist.

Die Abtriebswelle 18 ist mittels eines ersten Abtriebswellenlagers 30 und eines zweiten Abtriebswellenlagers 32 drehbar an dem Gehäuse 12 gelagert.

Genauer gesagt weist das zu der Abtriebswelle 18 hin weisende Ende der Antriebswelle 14 einen Hohlabschnitt 34 auf (der beispielsweise durch eine Bohrung oder Ähnliches vorgesehen sein kann), und ein Ende der Abtriebswelle 18 ist mittels eines Lagers, insbesondere eines Nadellagers 36, in dem Hohlabschnitt 34 der Antriebswelle 14 gelagert. Der Hohlabschnitt 34 ist wiederum an seinem Außenumfang mit dem ersten Abtriebswellenlager 30 drehbar am Gehäuse gelagert.

Der Hohlabschnitt 34 reicht im Bereich zwischen den zwei Abtriebswellenlagern 30, 32 etwa bis hin zu dem Abtriebskonstantenradsatz 28.

Der Hohlabschnitt 34 steht gegenüber dem ersten Abtriebswellenlager 30 in Richtung hin zu dem zweiten Abtriebswellenlager 32 vor.

Zwischen den zwei Abtriebswellenlagern 30, 32 ist ein weiterer Radsatz 40 zur Einrichtung einer weiteren Gangstufe gelagert. Genauer gesagt weist der zweite Radsatz 40 ein Losrad 42 auf, das drehbar an dem vorstehenden Abschnitt des Hohlabschnittes 34 gelagert ist, und weist ferner ein Festrad 44 auf, das mit der Vorgelegewelle 16 verbunden ist.

An dem vorstehenden Abschnitt des Hohlabschnittes 34 ist ferner eine zweite Schaltkupplung 46 gelagert, die zum Schalten des Radsatzes 40 dient.

Die zweite Schaltkupplung 46 ist, genauer gesagt, zwischen dem zweiten Radsatz 40 und dem Abtriebskonstantenradsatz 28 angeordnet. Hierdurch kann der zweite Radsatz 40 relativ nahe an dem ersten Abtriebswellenlager 30 gelagert werden.

Bei dem Stufenwechselgetriebe 10 kann ein Direktgang (die Möglichkeit einer direkten Verbindung zwischen Antriebswelle 14 und Abtriebswelle 18) vorgesehen sein, wie es gezeigt ist. In diesem Fall können eine Schaltkupplung 50 für den Direktgang und die Schaltkupplung 46 in ein Paket 51 integriert sein.

Es versteht sich, dass die Losräder der Radsätze 20, 40 entweder an der Antriebswelle 14 oder an der Vorgelegewelle 16 angeordnet werden können. Die Anordnung des Losrades 24 an der Vorgelegewelle 16 bzw. des Losrades des Radsatzes 40 an der Antriebswelle 14 ist lediglich beispielhaft zu verstehen.

Durch die Maßnahme, zwischen den zwei Lagern 30, 32 der Abtriebswelle 18 gleichfalls einen der "normalen" Radsätze zum Einrichten einer jeweiligen Gangstufe anzuordnen, kann der Abstand zwischen den zwei Lagern 30, 32 vergrößert werden. Hierdurch ergibt sich eine größere Stützbreite für die Lagerung der Abtriebswelle 18. Die Lagerbelastung sinkt. Es kann jedoch auch eine vergleichsweise steife Lagerung des vergleichsweise hohe Momente übertragenden Abtriebskonstantenradsatzes 28 erzielt werden. Denn während Inline-Getriebe aus dem Stand der Technik relativ große Stützbreiten zwischen den Lagerungen aufweisen, hat das erfindungsgemäße Getriebe eine ausreichend verkürzte bzw. optimierte Stützbreite.

Ferner lässt sich insgesamt eine kurze Baulänge des Stufenwechselgetriebes 10 erzielen, da es nicht notwendig ist, das zweite Lager 32 in axialer Richtung weit entfernt von dem Abtriebskonstantenradsatz 28 anzuordnen.

Durch die Maßnahme, die Antriebswelle 14 und die Abtriebswelle 18 ineinander zu lagern, können die beiden Wellen in diesem Bereich mittels eines einzelnen Lagers 30 an dem Gehäuse 12 gelagert werden. Demzufolge ist zwischen einer getriebeeingangsseitigen Gehäusewand und einer getriebeausgangsseitigen Gehäusewand nur eine Zwischenwand des Gehäuses 12 notwendig.

Im Bereich des Getriebeeingangs ist die Antriebswelle 14 mittels eines ersten Antriebswellenlagers 48 an dem Gehäuse 12 gelagert.

Insgesamt sind somit zur Lagerung der Antriebswelle 14 und der Abtriebswelle 18 lediglich drei Lager notwendig, nämlich die Lager 48, 30, 32 in der genannten Reihenfolge vom Getriebeeingang aus gesehen.

In Fig. 2 ist eine weitere Ausführungsform des erfindungsgemäßen Stufenwechselgetriebes generell mit 10' bezeichnet.

Das Stufenwechselgetriebe 10' entspricht hinsichtlich Aufbau und Funktionsweise generell dem Stufenwechselgetriebe 10 der Fig. 1. Im Folgenden wird daher lediglich auf Unterschiede eingegangen.

Während bei dem Stufenwechselgetriebe 10 ein Abtriebskonstantenradsatz 28 vorgesehen ist, weist das Stufenwechselgetriebe 10' zwei Abtriebskonstantenradsätze 28', 40' auf, die mittels eines Schaltkupplungspaketes 51 alternativ schaltbar sind.

Das Schaltkupplungspaket 51 weist eine zweite Schaltkupplung 46' und eine dritte Schaltkupplung 49 auf.

Die Antriebswelle 14' ist in dem Hohlabschnitt 34' der Abtriebswelle 18' gelagert, und zwar mittels eines Nadellagers 36'. Der Hohlabschnitt 34' seinerseits ist mittels des Lagers 30' an dem Gehäuse 12' gelagert.

Auch bei dem Stufenwechselgetriebe 10' sind somit zwischen den zwei Lagern 30', 32' der Abtriebswelle 18' zwei Radsätze 40', 28' gelagert, so dass ein vergleichsweise großer Abstand der zwei Lager 30', 32' realisiert werden kann, ohne eine Baulängenzunahme.

Die zwei Radsätze 40', 28' können nach der Art eines regulären Abtriebskonstantenradsatzes und eines Overdrive-Abtriebskonstantenradsatzes ausgeführt sein.

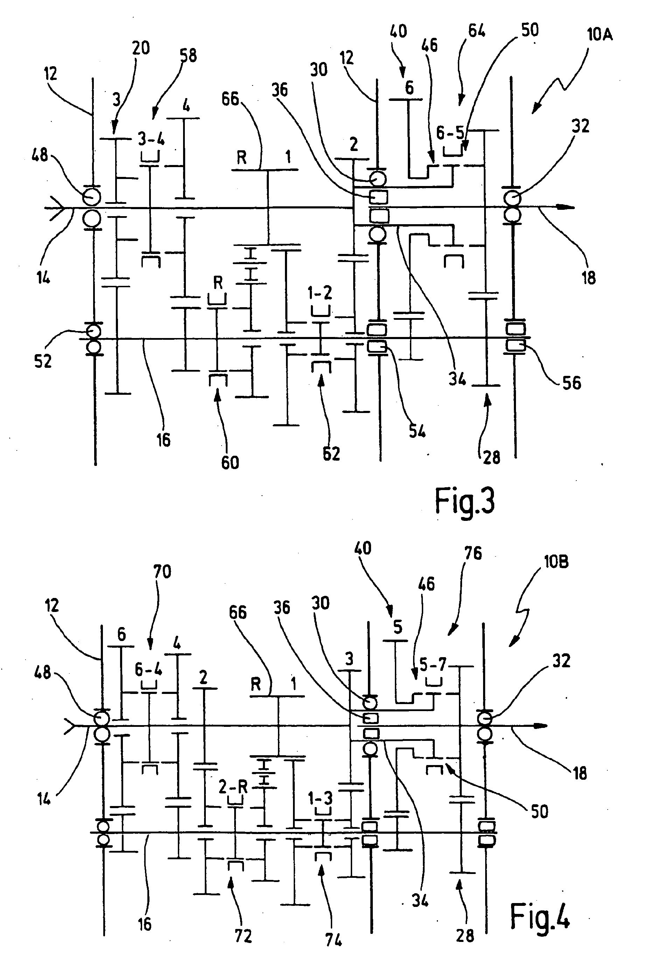

In Fig. 3 ist eine weitere Ausführungsform des erfindungsgemäßen Stufenwechselgetriebes generell mit 10A bezeichnet.

Das Stufenwechselgetriebe 10A entspricht hinsichtlich Funktion und Aufbau generell dem Stufengetriebe 10 der Fig. 1. Im Folgenden wird lediglich auf Unterschiede eingegangen.

Das Stufenwechselgetriebe 10A ist als 6-Gang-Handschaltgetriebe (HSG) ausgelegt.

Das Gehäuse 12 des Getriebes 10A weist eine getriebeeingangsseitige Wand auf, an der das ersten Antriebswellenlager 48 und ein erstes Lager 52 für die Vorgelegewelle 16 angeordnet sind.

Ferner weist das Gehäuse 12 eine abtriebsseitige Gehäusewand auf, an der das zweite Abtriebswellenlager 32 und ein Lager 56 für die Vorgelegewelle 16 angeordnet sind.

An einer Zwischenwand des Gehäuses 12 sind das erste Abtriebswellenlager 30 sowie ein weiteres Lager 54 für die Vorgelegewelle 16 angeordnet.

Zwischen der getriebeeingangsseitigen Gehäusewand und der Zwischenwand sind Radsätze für die folgenden Gangstufen in dieser Reihenfolge vom Getriebeeingang aus gesehen angeordnet: Gangstufe 3 und Gangstufe 4, mit dazwischenliegendem Schaltkupplungspaket 58, Gangstufe R mit Schaltkupplungspaket 60, Gangstufen 1 und 2 mit dazwischenliegendem Schaltkupplungspaket 62.

An dem Hohlabschnitt 34 der Antriebswelle 14 ist ein Radsatz 40 für den sechsten Gang gelagert, sowie ein viertes Schaltkupplungspaket 64. Das vierte Schaltkupplungspaket 64 beinhaltet die Schaltkupplung 46 zum Schalten des Radsatzes 40 sowie eine Direktschaltkupplung 50 zum direkten Verbinden von Antriebswelle 14 und Abtriebswelle 18, wodurch bei dem Stufenwechselgetriebe 10A die fünfte Gangstufe eingerichtet wird.

Das Stufenwechselgetriebe 10A ist hinsichtlich der Radsätze ferner so ausgelegt, dass für den Rückwärtsgang und die erste Gangstufe an der Antriebswelle 14 ein gemeinsames Festrad 66 (üblicherweise mit einer oder auch mit zwei Verzahnungen) festgelegt ist.

In Fig. 4 ist eine schematische Darstellung einer weiteren Ausführungsform des erfindungsgemäßen Stufenwechselgetriebes generell mit 10B bezeichnet.

Hinsichtlich Aufbau und Funktionsweise entspricht das Stufenwechselgetriebe 10B dem Stufenwechselgetriebe 10 der Fig. 1. Im Folgenden wird lediglich auf Unterschiede eingegangen.

Das Stufenwechselgetriebe 10B ist hinsichtlich des Radsatzaufbaus als automatisiertes Schaltgetriebe (ASG) mit 7 Gangstufen ausgelegt.

Dies bedeutet insbesondere, dass es nicht notwendig ist, einem Schaltkupplungspaket benachbarte Gangstufen zuzuordnen. Vielmehr ist es zur Erzielung einer überschneidenden Betriebsweise zwischen Auslegen Quellgangstufe und dem Einlegen einer Zielgangstufe in manchen Fällen sogar sinnvoll, benachbarte Gangstufen unterschiedlichen Schaltkupplungspaketen zuzuordnen.

Demzufolge ist bei dem Stufenwechselgetriebe 10B zwischen der getriebeeingangsseitigen Gehäusewand und der Zwischenwand des Gehäuses 12 folgender Radsatzaufbau, und zwar in dieser Reihenfolge vom Getriebeeingang aus gesehen, vorgesehen: Radsatz für die Gangstufe 6 und Radsatz für die Gangstufe 4, mit dazwischenliegendem Schaltkupplungspaket 70, Radsatz für die Gangstufe 2 und die Rückwärtsgangstufe, mit dazwischenliegendem zweiten Schaltkupplungspaket 72, Radsatz für die Gangstufe 1 und Radsatz für die Gangstufe 3, mit dazwischenliegendem dritten Schaltkupplungspaket 74.

Zwischen den zwei Lagern 30, 32 sind bei dem Stufenwechselgetriebe 10B ein Radsatz 40 für die Gangstufe 5 und eine zugehörige Schaltkupplung 46 sowie eine Direktschaltkupplung 50 zum Einrichten einer direkten Gangstufe angeordnet, wobei die direkte Gangstufe im vorliegenden Fall die Gangstufe 7 ist. Die Schaltkupplungen 46, 50 sind in ein Schaltkupplungspaket 76 integriert.

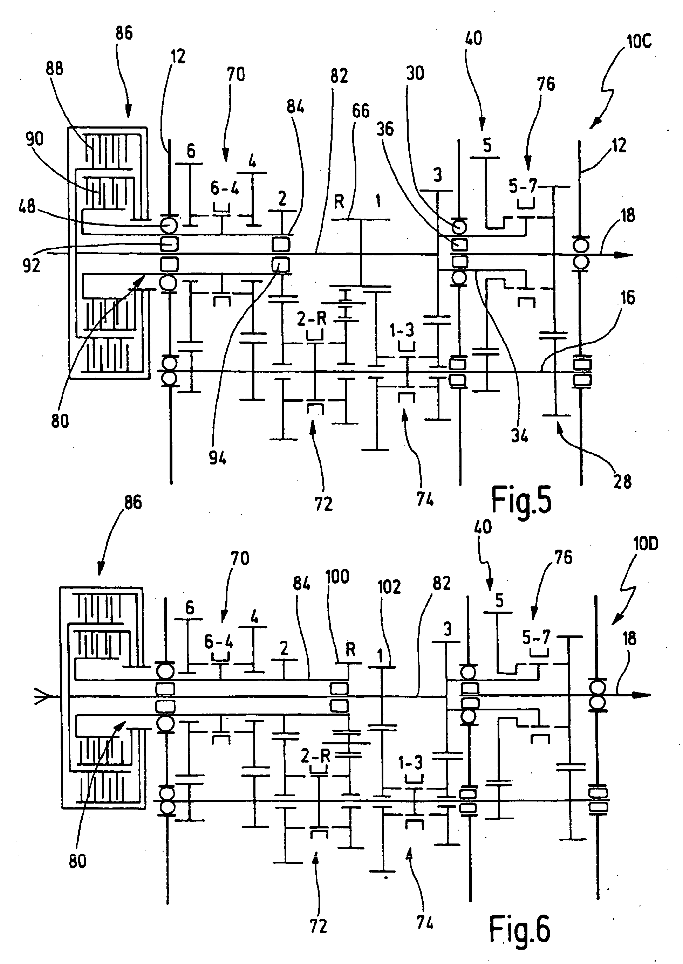

In den Fig. 5 und 6 sind schematische Darstellungen von weiteren Ausführungsformen des erfindungsgemäßen Stufenwechselgetriebes generell mit 10C bzw. 10D bezeichnet.

Die Stufenwechselgetriebe 10C, 10D entsprechen hinsichtlich Aufbau und Funktionsweise generell dem Stufenwechselgetriebe 10B, insbesondere hinsichtlich der Radsatzreihenfolge, wobei die Stufenwechselgetriebe 10C, 10D jedoch als Doppelkupplungsgetriebe ausgelegt sind.

Die folgende Beschreibung der Unterschiede zu dem Stufenwechselgetriebe 10B bezieht sich auf sowohl das Stufenwechselgetriebe 10C als auch das Stufenwechselgetriebe 10D.

Die beiden Stufenwechselgetriebe 10C, 10D weisen als Antriebswelleneinrichtung 80 eine erste Antriebswelle 82 und eine hierzu koaxiale, als Hohlwelle ausgebildete zweite Antriebswelle 84 auf. Die zwei Antriebswellen 82, 84 sind dazu eingerichtet, mit einer getriebeeingangsseitigen Doppelkupplungsanordnung 86 verbunden zu werden. Genauer gesagt ist die erste Antriebswelle 82 mit einer ersten Kupplung 88 der Doppelkupplungsanordnung 86 verbindbar. Die zweite Antriebswelle 84 ist mit einer zweiten Kupplung 90 der Doppelkupplungsanordnung 86 verbindbar.

Die Antriebswellen 82, 84 sind aufeinander gelagert, und zwar mittels eines ersten Nadellagers 92 und eines zweiten Nadellagers 94. Die zweite Antriebswelle 84 ist mittels des getriebeeingangsseitigen ersten Antriebswellenlagers 48 an dem Gehäuse 12 gelagert. Das erste Nadellager 92 ist etwa mit dem ersten Antriebswellenlager 48 ausgerichtet. Das zweite Nadellager 94 ist etwa im Austrittsbereich der ersten Antriebswelle 82 aus der kürzeren zweiten Antriebswelle 84 heraus angeordnet.

Die Radsätze für die Gangstufen 6, 4 und 2 sind der zweiten Antriebswelle 84 zugeordnet. Die Radsätze R, 1, 3, 5 sind der ersten Antriebswelle 84 zugeordnet.

Die Funktionsweise eines Doppelkupplungsgetriebes, insbesondere die Tatsache, dass die geraden Gangstufen der einen Antriebswelle und die ungeraden Gangstufen der anderen Antriebswelle zugeordnet sind, um so eine überschneidende Betätigung der eingangsseitigen Kupplungen 88, 90 und somit zugkraftunterbrechungsfreie Gangwechsel durchzuführen, wird als bekannt vorausgesetzt.

Das Stufenwechselgetriebe 10D unterscheidet sich von dem Stufenwechselgetriebe 10C lediglich dadurch, dass die Gangstufe R für den Rückwärtsgang nicht der ersten Antriebswelle 82, sondern der zweiten Antriebswelle 84 zugeordnet ist. Demzufolge ist für die Rückwärtsgangstufe R ein separates Festrad 100 an der zweiten Antriebswelle 84 festgelegt. Für die Gangstufe 1 ist ein separates Festrad 102 an der ersten Antriebswelle 82 festgelegt.

## Patentansprüche

1. Stufenwechselgetriebe (10), insbesondere für Kraftfahrzeuge, mit einem Gehäuses (12), einer Antriebswelleneinrichtung (14; 80), einer Abtriebswelle (18) und einer Vorgelegewelle (16), wobei eine Mehrzahl von Radsätzen (20, 40) an der Abtriebswelle (18) bzw. der Vorgelegewelle (16) gelagert ist, wobei die Radsätze (20, 40) zur Einrichtung unterschiedlicher Gangstufen mittels jeweiliger Schaltkupplungen (26, 46) geschaltet werden können, wobei die Vorgelegewelle (16) mit der Abtriebswelle (18) über einen Abtriebskonstantenradsatz (28) verbunden ist, und wobei die Abtriebswelle (18) im Bereich ihrer gegenüberliegenden Enden mittels zweier Lager (30, 32) drehbar an dem Gehäuse (12) gelagert ist,
**dadurch gekennzeichnet, dass**
wenigstens einer (40) der Radsätze (20, 40) in axialer Richtung im Bereich zwischen den zwei Lagern (30, 32) der Abtriebswelle (18) gelagert ist.

2. Stufenwechselgetriebe nach Anspruch 1, **dadurch gekennzeichnet, dass** die Abtriebswelle (18) im Bereich ihres einen Endes in einem Hohlabschnitt (34) der Antriebswelleneinrichtung (14; 80) gelagert ist.

3. Stufenwechselgetriebe nach Anspruch 2, **dadurch gekennzeichnet, dass** ein Rad des zwischen den Lagern (30, 32) gelagerten Radsatzes (40) außen an dem Hohlabschnitt (34) gelagert ist.

4. Stufenwechselgetriebe nach einem der Ansprüche 1 - 3, **dadurch gekennzeichnet, dass** eine Schaltkupplung (46) zum Schalten des Radsatzes (40) gleichfalls zwischen den Lagern (30, 32) gelagert ist, insbesondere an dem Hohlabschnitt (34) gelagert ist.

5. Stufenwechselgetriebe nach einem der Ansprüche 1 - 4, **dadurch gekennzeichnet, dass** ein Festrad des Abtriebskonstantenradsatzes (28) an der Abtriebswelle (18) in axialer Richtung zwischen den zwei Lagern (30, 32) befestigt ist.

6. Stufenwechselgetriebe nach Anspruch 5, **dadurch gekennzeichnet, dass** eine Direktschaltkupplung (50) dazu vorgesehen ist, um die Antriebswelleneinrichtung (14) direkt mit der Abtriebswelle (18) zu verbinden.

7. Stufenwechselgetriebe nach Anspruch 6, **dadurch gekennzeichnet, dass** die Direktschaltkupplung (50) und die Schaltkupplung (46) zum Schalten des zwischen den Lagern gelagerten Radsatzes (40) in einem Schaltkupplungspaket (51; 64; 76) integriert sind.

8. Stufenwechselgetriebe nach einem der Ansprüche 1 - 7, **dadurch gekennzeichnet, dass** die Antriebswelleneinrichtung (14) durch eine einzelne Antriebswelle (14) gebildet ist.

9. Stufenwechselgetriebe nach einem der Ansprüche 1 - 7, **dadurch gekennzeichnet, dass** die Antriebswelleneinrichtung (80) eine erste Antriebswelle (82) und eine hierzu koaxiale, als Hohlwelle ausgebildete zweite Antriebswelle (84) aufweist, die mit einer Doppelkupplungsanordnung (86) verbindbar sind.

10. Stufenwechselgetriebe nach Anspruch 9, **dadurch gekennzeichnet, dass** die erste Welle (82) in axialer Richtung gegenüber der zweiten Welle (84) vorsteht und dass die zweite Welle (84) im Austrittsbereich der ersten Welle (82) nicht an dem Gehäuse (12) gelagert ist.

11. Stufenwechselgetriebe nach Anspruch 1, **dadurch gekennzeichnet, dass** die Abtriebswelle (18') im Bereich ihres einen Endes einen Hohlabschnitt (34') aufweist, in dem ein Ende der Antriebswelleneinrichtung (14') gelagert ist.

12. Stufenwechselgetriebe nach einem der Ansprüche 1 - 11, **dadurch gekennzeichnet, dass** die Antriebswelleneinrichtung (14; 80) im Bereich ihrer Enden mittels zweier Lager (48, 30) an dem Gehäuse drehbar gelagert ist.

13. Stufenwechselgetriebe nach einem der Ansprüche 1 - 12, **dadurch gekennzeichnet, dass** die Antriebswelleneinrichtung (14; 80) und die Abtriebswelle (18) insgesamt mittels drei Lagern (48, 30, 32) an dem Gehäuse (12) gelagert sind.

14. Stufenwechselgetriebe nach einem der Ansprüche 1 - 13, **dadurch gekennzeichnet, dass** die Antriebswelleneinrichtung (14; 80) und die Abtriebswelle (18) koaxial zueinander ausgerichtet sind.

## Claims

1. A step-by-step variable transmission (10), in particular for motor vehicles, having a housing (12), having a drive input shaft device (14; 80), having a drive output shaft (18) and having a countershaft (16), with a plurality of gearwheel sets (20, 40) being mounted on the drive output shaft (18) and on the countershaft (16), with it being possible for the gearwheel sets (20, 40) to be shifted so as to establish different gear stages by means of respective shift clutches (26, 46), with the countershaft (16) being connected to the drive output shaft (18) by means of a drive output constant wheel set (28), and with the drive output shaft (18) being rotatably mounted in the region of its opposite ends on the housing (12) by means of two bearings (30, 32),
**characterized in that**
at least one (40) of the gearwheel sets (20, 40) is mounted in the region in the axial direction between the two bearings (30, 32) of the drive output shaft (18).

2. The step-by-step variable transmission as claimed in claim 1, **characterized in that** the drive output shaft (18) is mounted in the region of its one end in a hollow section (34) of the drive input shaft device (14; 80).

3. The step-by-step variable transmission as claimed in claim 2, **characterized in that** one gearwheel of the gearwheel set (40) which is mounted between the bearings (30, 32) is mounted externally on the hollow section (34).

4. The step-by-step variable transmission as claimed in one of claims 1-3, **characterized in that** a shift clutch (46) for shifting the gearwheel set (40) is likewise mounted between the bearings (30, 32), in particular on the hollow section (34).

5. The step-by-step variable transmission as claimed in one of claims 1-4, **characterized in that** a fixed gearwheel of the drive output constant wheel set (28) is fastened to the drive output shaft (18) in the axial direction between the two bearings (30, 32).

6. The step-by-step variable transmission as claimed in claim 5, **characterized in that** a direct shift clutch (50) is provided in order to connect the drive input shaft device (14) directly to the drive output shaft (18).

7. The step-by-step variable transmission as claimed in claim 6, **characterized in that** the direct shift clutch (50) and the shift clutch (46) for shifting the gearwheel set (40) which is mounted between the bearings, are integrated in one shift clutch pack (51; 64; 76).

8. The step-by-step variable transmission as claimed in one of claims 1-7, **characterized in that** the drive input shaft device (14) is formed by a single drive input shaft (14).

9. The step-by-step variable transmission as claimed in one of claims 1-7, **characterized in that** the drive input shaft device (80) has a first drive input shaft (82) and a second drive input shaft (84) which is coaxial with respect to said first drive input shaft (82) and is embodied as a hollow shaft, which drive input shafts can be connected to a dual clutch arrangement (86).

10. The step-by-step variable transmission as claimed in claim 9, **characterized in that** the first shaft (82) projects beyond the second shaft (84) in the axial direction and **in that** the second shaft (84) is not mounted on the housing (12) in the exit region of the first shaft (82).

11. The step-by-step variable transmission as claimed in claim 1, **characterized in that** the drive output shaft (18') has, in the region of its one end, a hollow section (34') in which one end of the drive input shaft device (14') is mounted.

12. The step-by-step variable transmission as claimed in one of claims 1-11, **characterized in that** the drive input shaft device (14; 80) is rotatably mounted in the region of its ends on the housing by means of two bearings (48, 30).

13. The step-by-step variable transmission as claimed in one of claims 1-12, **characterized in that** the drive input shaft device (14; 80) and the drive output shaft (18) are mounted on the housing (12) by means of a total of three bearings (48, 30, 32).

14. The step-by-step variable transmission as claimed in one of claims 1-13, **characterized in that** the drive input shaft device (14; 80) and the drive output shaft (18) are aligned coaxially with respect to one another.

## Revendications

1. Boîte de vitesses étagée (10), notamment pour véhicules automobiles, comprenant un carter (12), un dispositif (14 ; 80) à arbre d'entraînement, un arbre mené (18) et un arbre intermédiaire (16), une pluralité de jeux de roues (20, 40) étant respectivement montée sur l'arbre mené (18) ou sur l'arbre intermédiaire (16), lesdits jeux de roues (20, 40) pouvant être embrayés au moyen d'accouplements sélecteurs respectifs (26, 46), en vue d'établir différents rapports, ledit arbre intermédiaire (16) étant relié audit arbre mené (18) par l'intermédiaire d'un jeu de roues (28) à constante de sortie, et ledit arbre mené (18) étant monté à rotation sur le carter (12), au moyen de deux paliers (30, 32), dans la région de ses extrémités tournées à l'opposé l'une de l'autre,
**caractérisée par le fait**
**qu'**au moins l'un (40) des jeux de roues (20, 40) est monté, dans le sens axial, dans la région située entre les deux paliers (30, 32) de l'arbre mené (18).

2. Boîte de vitesses étagée selon la revendication 1, **caractérisée par le fait que** l'arbre mené (18) est monté, dans la région de l'une de ses extrémités, dans un tronçon creux (34) du dispositif (14 ; 80) à arbre d'entraînement.

3. Boîte de vitesses étagée selon la revendication 2, **caractérisée par le fait qu'**une roue du jeu de roues (40), interposé entre les paliers (30, 32), est montée extérieurement sur le tronçon creux (34).

4. Boîte de vitesses étagée selon l'une des revendications 1-3, **caractérisée par le fait qu'**un accouplement sélecteur (46), destiné à embrayer le jeu de roues (40), est semblablement monté entre les paliers (30, 32), en particulier sur le tronçon creux (34).

5. Boîte de vitesses étagée selon l'une des revendications 1-4, **caractérisée par le fait qu'**une roue fixe du jeu de roues (28) à constante de sortie est fixée à l'arbre mené (18), dans le sens axial, entre les deux paliers (30, 32).

6. Boîte de vitesses étagée selon la revendication 5, **caractérisée par le fait qu'**un accouplement sélecteur direct (50) est prévu pour relier directement le dispositif (14) à arbre d'entraînement à l'arbre mené (18).

7. Boîte de vitesses étagée selon la revendication 6, **caractérisée par le fait que** l'accouplement sélecteur direct (50) et l'accouplement sélecteur (46) sont intégrés dans un groupe d'accouplement sélecteur (51 ; 64 ; 76), en vue d'embrayer le jeu de roues (40) monté entre les paliers.

8. Boîte de vitesses étagée selon l'une des revendications 1-7, **caractérisée par le fait que** le dispositif (14) à arbre d'entraînement est formé d'un arbre individuel d'entraînement (14).

9. Boîte de vitesses étagée selon l'une des revendications 1-7, **caractérisée par le fait que** le dispositif (80) à arbres d'entraînement comprend un premier arbre d'entraînement (82) et un second arbre d'entraînement (84) réalisé sous la forme d'un arbre creux et coaxial à l'arbre précité, lesdits arbres pouvant être reliés à un ensemble d'accouplement double (86).

10. Boîte de vitesses étagée selon la revendication 9, **caractérisée par le fait que** le premier arbre (82) fait saillie dans le sens axial vis-à-vis du second arbre (84) ; et **par le fait que** ledit second arbre (84) n'est pas monté sur le carter (12) dans la zone de sortie dudit premier arbre (82).

11. Boîte de vitesses étagée selon la revendication 1, **caractérisée par le fait que** l'arbre mené (18') comporte, dans la région de l'une de ses extrémités, un tronçon creux (34') dans lequel est montée une extrémité du dispositif (14') à arbre d'entraînement.

12. Boîte de vitesses étagée selon l'une des revendications 1-11, **caractérisée par le fait que** le dispositif (14 ; 80) à arbre d'entraînement est monté à rotation sur le carter, au moyen de deux paliers (48, 30), dans la région de ses extrémités.

13. Boîte de vitesses étagée selon l'une des revendications 1-12, **caractérisée par le fait que** le dispositif (14 ; 80) à arbre d'entraînement et l'arbre mené (18) sont montés, sur le carter (12), au moyen de paliers (48, 30, 32) au nombre total de trois.

14. Boîte de vitesses étagée selon l'une des revendications 1-13, **caractérisée par le fait que** le dispositif (14 ; 80) à arbre d'entraînement, et l'arbre mené (18), sont orientés coaxialement l'un à l'autre.
